# EUROPEAN PATENT APPLICATION

(11) **EP 4 277 377 A1**
(43) Date of publication of application: **15.11.2023**
(21) Application number: 21916860.6
(22) Date of filing: 08.01.2021
(51) Int. Cl.: H04W 64/00

(54) **POSITIONING MEASUREMENT METHOD, TERMINAL DEVICE, NETWORK DEVICE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Novagraaf Technologies
(86) International application number: PCT/CN2021/070981
(87) International publication number: WO 2022/147805

(57) **Abstract**

The embodiments of the present invention provide a positioning measurement method, a terminal device, a network device, and a computer-readable storage medium, which are used for increasing the efficiency of simultaneously processing positioning reference signals (PRSs), shortening a measurement delay, and improving measurement precision. The embodiments of the present invention may comprise: a terminal device determining measurement delay requirements of a plurality of aggregation PRSs according to the configured UE capability; and the terminal device performing positioning measurement according to the measurement delay requirements.

## Description

### TECHNICAL FIELD

This application relates to the field of communications, and in particular, to a positioning measurement method, a terminal device, a network device, and a computer-readable storage medium.

### BACKGROUND

In the New Radio (NR) system, it can be known from the basic principle of positioning that, if the signal bandwidth used for positioning is increased, the positioning accuracy may theoretically be improved. However, on the one hand, the maximum bandwidth of an NR carrier is limited; for example, in the Frequency Range 1, the maximum bandwidth of an NR carrier is 100MHz. On the other hand, the operator's spectrum is limited, and the spectrum of a single carrier may not reach the maximum bandwidth supported by the protocol. For positioning signals on different carriers, the measurements can be performed independently. In order to further improve the positioning accuracy, multiple (two or more) positioning signals may be used in combination to support the positioning function. At present, there is no relevant positioning measurement mechanism for the solution of supporting the positioning function by using multiple positioning signals jointly.

### SUMMARY

Embodiments of this disclosure provide a positioning measurement method, a terminal device, a network device, and a computer-readable storage medium, which are used for improving the efficiency of simultaneous PRS processing, shortening the measurement delay, and improving the measurement accuracy.

A first aspect of the embodiments of this disclosure provides a positioning measurement method, which may include:
determining, by a terminal device, measurement delay requirement of multiple aggregated positioning reference signals (PRSs) according to a configured UE capability; and
performing, by the terminal device, positioning measurement according to the measurement delay requirement.

A second aspect of the embodiments of this disclosure provides a positioning measurement method, which may include:
sending, by a network device, a configured UE capability to a terminal device, wherein the UE capability is used by the terminal device to determine measurement delay requirement of multiple aggregated PRSs, and the measurement delay requirement is used for the terminal device to perform positioning measurement.

In yet another aspect of the embodiments of this disclosure, a terminal device is provided, which has the functions of improving the efficiency of processing PRS simultaneously, shortening the measurement delay, and improving the measurement accuracy at the same time. Thes functions may be implemented by hardware, or by hardware executing corresponding software. The hardware or software includes one or more modules corresponding to the above functions.

In yet another aspect of the embodiments of this disclosure, a network device is provided, which has the functions of improving the efficiency of processing PRS simultaneously, shortening the measurement delay, and improving the measurement accuracy at the same time. Thes functions may be implemented by hardware, or by hardware executing corresponding software. The hardware or software includes one or more modules corresponding to the above functions.

Another aspect of the embodiments of this disclosure provides a terminal device, including: a memory storing executable program codes; a processor coupled to the memory; where the processor calls the executable program codes stored in the memory, thereby implementing the method described in the first aspect of the embodiments of this disclosure.

Another aspect of the embodiments of this disclosure provides a network device, including: a memory storing executable program codes; a processor coupled to the memory; where the processor calls the executable program codes stored in the memory, thereby implementing the method described in the second aspect of the embodiments of this disclosure.

Yet another aspect of the embodiments of this disclosure provides a computer-readable storage medium, including instructions which, when being executed on a computer, cause the computer to implement the method as described in the first aspect or the second aspect of this disclosure.

Yet another aspect of the embodiments of this disclosure provides a computer program product including instructions, which, when running on a computer, causes the computer to implement the method as described in the first aspect or the second aspect of this disclosure.

Another aspect of the embodiments of this disclosure provides a chip. The chip is coupled with a memory in the communication device, so that the chip, when running, invokes program instructions stored in the memory, thereby causing the communication device to implement the method as described in the first aspect of this disclosure.

In the technical solution provided by some embodiments of this disclosure, the terminal device determines measurement delay requirement of multiple aggregated PRSs according to the configured UE capability; and performs positioning measurement according to the measurement delay requirement. Accordingly, the efficiency of processing PRS simultaneously can be improved, the measurement time delay can be shortened, and the measurement accuracy can be improved at the same time.

### BRIEF DESCRIPTION OF THE DRAWINGS

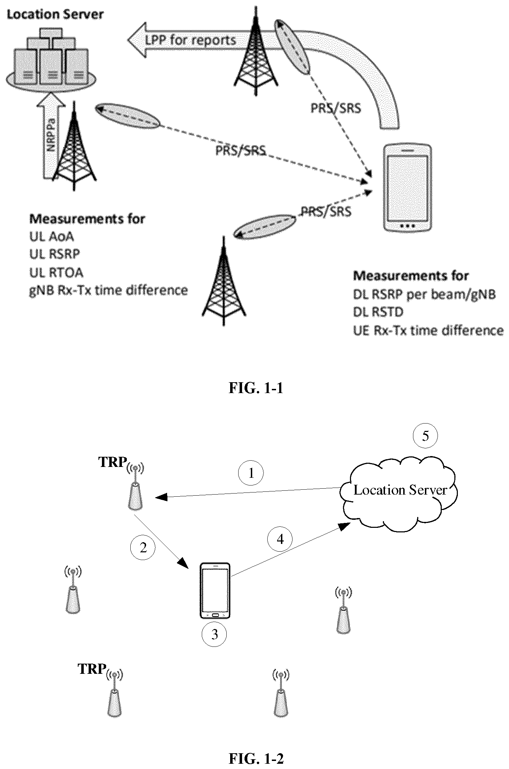

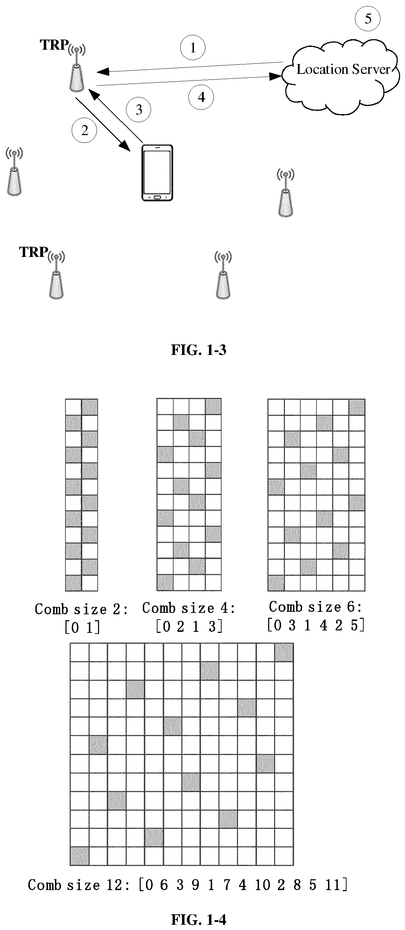

FIG. 1-1 is a schematic diagram of a positioning technology in an implementation.
FIG. 1-2 is a schematic diagram of a downlink-based positioning method in an implementation according to some embodiments.
FIG. 1-3 is a schematic diagram of an uplink-based positioning method in an implementation according to some embodiments.
FIG. 1-4 is a schematic diagram of taking value of the comb-size in an implementation.
FIG.2 is a system architecture diagram of a communication system to which some embodiments of this disclosure are applied.
FIG.3 is a schematic diagram of a positioning measurement method according to some embodiments of this application.
FIG. 4 is a schematic diagram of a terminal device according to some embodiments of this application.
FIG. 5 is a schematic diagram of a network device according to some embodiments of this application.
FIG. 6 is a schematic diagram of a terminal device according to some other embodiments of this application.
FIG. 7 is a schematic diagram of a network device according to some other embodiments of this application.

### DETAILED DESCRIPTION

The technical solutions in some embodiments of this disclosure will be described below with reference to the drawings according to some embodiments of this disclosure. Obviously, the described embodiments are only a part of embodiments of this disclosure, rather than all of them. Based on some embodiments of this disclosure, all other embodiments obtained by those skilled in the art without creative efforts shall fall within the protection scope of this disclosure.

A brief description of the relevant background in this disclosure will be described below first, as follows.

Positioning technology is one of the core technologies of modem communication systems and navigation systems. For example, satellite navigation systems, Bluetooth, and wireless fidelity (WiFi) all provide positioning functions. Similarly, modem cellular communication systems also support positioning functions. Starting from 3G and 4G long term evolution (LTE) communication systems, various advanced positioning technologies are gradually added to cellular communication systems. In the 5G new radio (NR) communication system, positioning technology is also supported, and the specific standard was introduced in Release 16. In the N of 3GPP Release 16 (R16), the following positioning technologies are introduced:
1) Downlink-Time Difference of Arrival (DL-TDOA)
2) Uplink-Time Difference of Arrival (UL-TDOA)
3) Multiple Round Trip Time (Multi-RTT)
4) Downlink-Angle of Departure (DL-AoD)
5) Uplink-Angle of Departure (UL-AoA)
6) Enhanced Cell ID positioning method

As shown in FIG. 1-1, it is a schematic diagram of the positioning technology in an implementation.

In order to support various positioning methods, R16 NR introduces a Positioning Reference Signal (PRS) in the downlink and a Sounding Reference Signal (SRS) for positioning in the uplink.

The NR-based positioning function mainly involves three parts.
1) Terminal (or referred to as User Equipment, UE)
2) Multiple network transmission/reception points (TRPs)
   Multiple TRPs around the terminal participate in cellular positioning;
   a base station may be a TRP; and
   there may be multiple TRPs under a base station.
3) Location Server

Operations of the location server includes location procedure and the like. For example, the location server may include a location management function (LMF).
1. Downlink-based positioning methods may be subdivided into two categories.
   1) UE-assisted positioning method
      i. UE performs positioning-related measurements.
      ii. Network calculates location information according to the measurement result reported by UE.
   2) UE-based positioning method
      i. UE performs positioning-related measurements, and calculates location information based on the measurement result.
2. The following takes a downlink-based positioning method (UE-assisted positioning method) as an example to illustrate a basic flow (FIG. 1-2).
   1) The location server notifies the TRP of related configuration.
      The related configuration may include configuration information of PRS, and/or a type of measurement results that the terminal needs to report.
   2) The TRP sends a positioning signal PRS.
   3) The terminal receives the positioning signal PRS and performs measurement.
      According to different positioning methods, the measurement results required by the terminal are also different.
   4) The terminal feeds back the measurement results to the location server.
      The terminal feeds back the measurement result to the location server through the base station.
   5) The location server calculates location-related information.
      The above is a schematic flow of a UE-assisted positioning method. For the UE-based positioning method, in the fourth step above, the terminal may directly calculate the location-related information according to the measurement results, and does not need to report the measurement results to the location server for being calculated by the location server. Under the UE-based positioning method, the terminal may need to know the location information corresponding to the TRP, so the network needs to notify the UE of the location information corresponding to the TRP in advance.
3. The following takes an uplink-based positioning method as an example to illustrate the basic flow (FIG. 1-3).
   1) The location server notifies the TRP of related configuration.
   2) The base station sends related signaling to the terminal.
   3) The terminal sends an uplink signal (SRS for positioning).
   4) The TRP performs measurement on the SRS for positioning, and sends the measurement results to the location server.
   5) The location server calculates location-related information.
4. Aggregation of DL PRS resources

Simultaneous transmission by the base station (gNB) and reception by the UE of intra-band one or more contiguous carriers in one or more contiguous PRS frequency layers (PFLs) can be studied further and if needed, specified during normative work; From both gNB and UE perspective, the applicability and feasibility of this enhancement for different scenarios, configurations, bands and RF architectures, can be further studied.

The corresponding English translation is as follows.
"Simultaneous transmission by the gNB and reception by the UE of intra-band one or more contiguous carriers in one or more contiguous PFLs can be studied further and if needed, specified during normative work;
From both" gNB and UE perspective, the applicability and feasibility of this enhancement for different scenarios, configurations, bands and RF architectures, can be further studied."

### 5. PRS comb size

(1) DL PRS sequence:
   Gold sequence in Channel State Information Reference Signal (CSI-RS);
   support 4096 sequence;
   sequence initialization (considering coexistence with CSI-RS).
(2) DL PRS remapping:
   staggered mapping pattern in one PRS resource;
   Comb size: 2, 4, 6, 12;
   Number of symbols: 2, 4, 6, 12.

As shown in FIG. 1-4, it is a schematic diagram of taking value of the comb-size in an implementation.

6. Muting pattern:
reduce interference between multiple PRS transmissions:
the purpose is to mute one PRS opportunity so that the UE can detect another PRS on the same resource.

Two noise reduction methods are supported: set level and repeat level.

7. PRS configuration:
all PRS resources in one frequency layer have the same frequency domain allocation in frequency:
the same resource bandwidth: granularity of four physical resource blocks (PRBs), at least 24 PRBs to 272 PRBs;
the same starting PRB, the same node (or referred to as point) A, the same Comb Size;
all PRS resources in one frequency layer have the following restrictions in the time domain: the same subcarrier spacing (SCS) and cyclic prefix (CP);
PRS resources in one PRS resource set have the following restrictions: the same period and horizontal offset setting.

In addition to the above frequency layers or common parameters, each PRS resource is also configured with the following parameters:
DL-PRS-SequenceId (sequence identifier);
DL-PRS-ReOffset (re-compensation);
DL-PRS-ResourceSlotOffset (slot offset);
DL-PRS-ResourceSymbolOffset (symbol offset);
DL-PRS-NumSymbols (number of symbols).

DL-PRS-QCL (Quasi Co-Location) information:
QCL-TypeD to a PRS/SSB in serving cell or non-serving cell. QCL-Type C to a SSB in serving cell or non-serving cell;
QCL-TypeD is used for supporting FR2; and
QCL-TypeC is used for assisting estimating the timing of PRS.

The corresponding English translation is as follows:
"DL-PRS-QCL-Info:
QCL-TypeD to a PRS/SSB in serving cell or non-serving cell. QCL-Type C to a SSB in serving cell or non-serving cell.
QCL-TypeD is used for supporting FR2.
QCL-TypeC is used for assisting estimating the timing of PRS."

8. Measurement gap and positioning cycle
the measurement gap is used for supporting PRS measurements. configured by network;
UE may request the configuration of the measurement gap from the network.

### 9. RSTD (timing difference of PRS)

### (1) RSTD measurement configuration parameters:

DL PRS resource(s) or PRS set configured as RSTD measurement time reference;
DL-PRS-expectedRSTD: time difference without reference DL SF; and
DL-PRS-expectedRSTD-uncertainty: search time window.

The corresponding English translation is as follows:
"DL PRS resource(s) or PRS set configured as RSTD measurement time reference.
DL-PRS-expectedRSTD:time difference w.r.t reference DL SF.
DL-PRS-expectedRSTD-uncertainty: search time window."

### (2) Definition of DL RSTD measurement

DL RSTD of NR is defined as the relative time difference between subframe starting time of two TRPs;
UE can use multiple PRSs to determine start of one subframe of one TRP.

The corresponding English translation is as follows:
"DL RSTD of NR is defined as the relative time difference between subframe starting time of two TRPs.
UE can use multiple PRS to determine start of one subframe of one TRP."

### (3) RSTD measurement

Quality metric: TimingMeasQuality-value and TimingMeasQuality-uncertainty;
Reference PRS resource ID(s) or set used as reference if determined by the UE;
PRS ID(s) or set used to calculate the RSTD;
a timestamp.

The corresponding English translation is as follows:
"RSTD measurement.
Quality metric: TimingMeasQuality-value and TimingMeasQuality-uncertainty.
Reference PRS resource ID(s) or set used as reference if determined by the UE.
PRS ID(s) or set used to calculate the RSTD.
A timestamp."

For MRTD (Maximum receive timing difference), reference can be made to the ts38133 protocol, which will not be repeated here.

### 10. Minimum requirement for NR carrier aggregation

As shown in Table 1 below, it illustrates the MRTD requirement for in-band discontinuous NR carrier aggregation.

**Table 1**

| Frequency Range Definition | MRTD (us) |
|---|---|
| FR1 | 3 |
| FR2 | 0.26 |

As shown in Table 2 below, it illustrates the MRTD requirement for inter-band NR carrier aggregation.

**Table 2**

| Frequency range for each pair of carriers | MRTD (us) |
|---|---|
| FR1 | 33 |
| FR2 | 8 |
| Between FR1 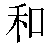 FR2 | 25 |

According to the basic principle of positioning, if the signal bandwidth used for positioning is increased, the positioning accuracy may theoretically be improved. However, on the one hand, the maximum bandwidth of an NR carrier is limited; for example, in the Frequency Range 1, the maximum bandwidth of an NR carrier is 100MHz. On the other hand, the operator's spectrum is limited, and the spectrum of a single carrier may not reach the maximum bandwidth supported by the protocol. For positioning signals on different carriers, the measurements can be performed independently. Moreover, in order to further improve the positioning accuracy, a manner is adopted by jointly using positioning signals on different carriers. For the combined use of positioning signals on different carriers, there are two different approaches.
(1) In the simple combination approach, simple joint processing is performed on the measurement results of positioning signals on different carriers, which is equivalent to adding measurement samples. This approach has relatively low requirements for timing alignment error and phase continuity on the two carriers.
(2) In the aggregation processing approach, positioning signals on different carriers are jointly regarded as an "equivalent" signal with a larger bandwidth, that is, signals are aggregated as an "aggregated signal" to perform measurement. According to different specific implementations, it may correspond to aggregation of NR positioning frequency layers, or aggregation of DL PRS, or aggregation of DL PRS resources, or aggregation of DL PRS, or aggregation of DL PRS in one or more positioning frequency layers. Aggregation may also be represented by other similar words, such as bundling, bundling in frequency domain, joint reception, which are not listed here.

Taking the aggregation of two downlink positioning signals as an example, the terminal may need to directly receive the two signals at a larger sampling rate, similarly as receiving the two signals as an equivalent signal occupying more frequency domain resources. It cannot be simply divided into two channels of signals, with each channel being used for receiving one of the downlink positioning signals.

This approach has high requirements for timing alignment error and phase continuity on the two carriers, and has high delay requirements for the signal sender and signal measurement side. Depending on the specific frequency range and bandwidth, the terminal may need to use a larger sampling rate to implement the aggregation processing approach. Since the aggregation processing approach has high requirements for product implementation, it may need to design a reasonable UE capability (or referred to as UE capacity) reporting mechanism. On the one hand, under the limitation of UE capability, the requirements of aggregation processing approach should be supported as much as possible; on the other hand, excessive requirements on UE capability should be avoided, otherwise it may be impossible for commercialization of UE. So far, there is no solution for the related UE capability.

Technical solutions according to some embodiments of this application may be applied to various communication systems, for example: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, New Radio (NR) system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) system or other communication systems.

Generally speaking, traditional communication systems support a limited number of connections and are easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, Vehicle to everything (V2X) communication, or the like. Some embodiments of this application may also be applied to these communication systems.

Optionally, the communication system in some embodiments of this application may be applied to a carrier aggregation (CA) scenario, a dual connectivity (DC) scenario, or a standalone (SA) networking scenario.

Optionally, the communication system in some embodiments of this application may be applied to an unlicensed spectrum, where the unlicensed spectrum may also be considered as a shared spectrum. Alternatively, the communication system in some embodiments of this application may also be applied to a licensed spectrum, where the licensed spectrum may also be considered unshared spectrum.

In this application, various embodiments are described in conjunction with the network device and terminal device, where the terminal device may also be referred to as user equipment (UE), access terminal, subscriber unit, subscriber station, mobile station, mobile site, remote station, remote terminal, mobile device, user terminal, terminal, wireless communication device, user agent, user device, or the like.

The terminal device may be a station (ST) in the WLAN, a cellular phone, a cordless phone, a Session Initiation Protocol (SIP) phone, a Wireless Local Loop (WLL) station, a personal digital processing (PDA) device, a handheld device with wireless communication capabilities, a computing device or other processing devices connected to wireless modems, an in-vehicle device, a wearable device, or a terminal device in the next-generation communication system such as the NR network, or a terminal device in a future-evolved network of the public land mobile network (PLMN), or the like.

In some embodiments of this application, the terminal device may be deployed on land, including indoor or outdoor, handheld, wearable, or vehicle-mounted; or may also be deployed on water (such as ships, etc.); or may also be deployed in the air (such as airplanes, balloons, and satellites).

In some embodiments of this application, the terminal device may be a mobile phone, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example without limitation, in some embodiments of this application, the terminal device may also be a wearable device. Wearable devices may also be called wearable smart devices, which are the general term for the intelligent design of daily wear and the development of wearable devices using wearable technology, such as glasses, gloves, watches, clothing and shoes. Wearable device is a portable device that is worn directly on the body or integrated into the user's clothing or accessories. Wearable device is not only a hardware device, but also realizes powerful functions through software support, data interaction, and cloud interaction. In a general sense, wearable smart devices may be of full-feature, large-scale, with complete or partial functions without relying on smart phones, including such as smart watches or smart glasses; or may only focus on a certain type of application function, which needs to cooperate with other devices such as smart phones, including such as various smart bracelets, and smart jewelry for physical sign monitoring.

In some embodiments of this application, the network device may be a device for communicating with a mobile device. For example, the network device may be an access point (AP) in WLAN, or a base transceiver station (BTS) in GSM or CDMA, a NodeB (NB) in WCDMA, an evolutional Node B (eNB or eNodeB) in LTE, a relay station, an access point, an in-vehicle device, a wearable device, a network device (gNB) in NR network, a network device in the future-evolved PLMN network, a network device in NTN network, or the like.

As an example without limitation, in some embodiments of this application, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station provided in a location such as land or water.

In some embodiments of this application, the network device may provide services for a cell, and the terminal device communicates with the network device through transmission resources (for example, frequency domain resources, or spectrum resources) used by the cell. The cell may correspond to the network device (e.g., a base station), and the cell may belong to a macro base station, or a base station corresponding to a small cell. The small cell may include a metro cell, a micro cell, a pico cell, a femto cell, and the like. These small cells have the characteristics of small coverage and low transmission power, and are suitable for providing high-speed data transmission services.

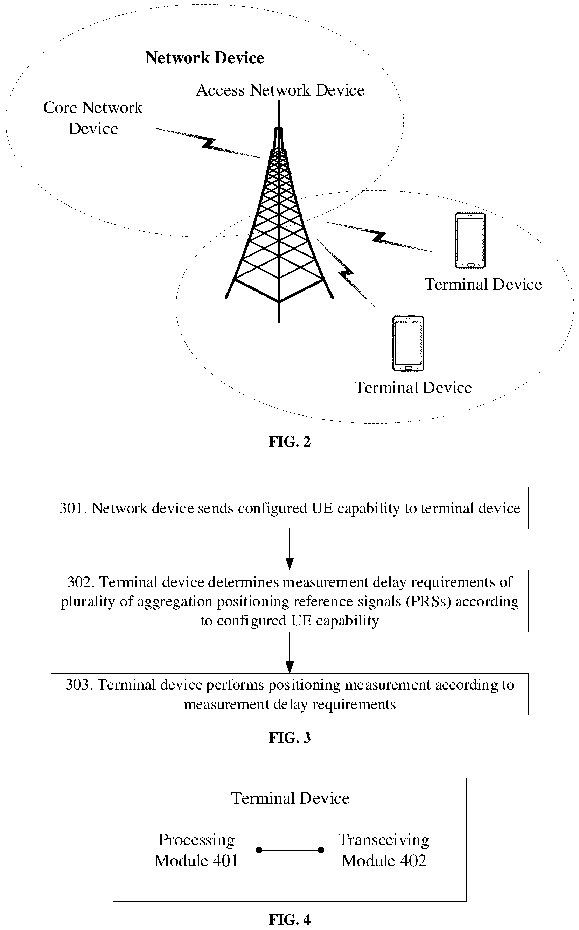

As shown in FIG. 2, it is a system architecture diagram of a communication system to which some embodiments of this disclosure are applied. The communication system may include a network device, and the network device may be a device that communicates with a terminal device (or referred to as a communication terminal, a terminal). The network device can provide communication coverage for a specific geographic area, and can communicate with terminal devices located within the coverage area. The network device may also be a server (e.g., a location server) and other devices. FIG. 2 exemplarily shows one network device and two terminal devices. Optionally, the communication system may include multiple network devices and the coverage of each network device may include other numbers of terminal devices, which are not limited in embodiments of this application. Optionally, the communication system may further include other network entities such as a network controller and a mobility management entity, which are not limited in embodiments of this application.

In some embodiments, the network device may further include access network device and core network device. In other words, the wireless communication system further includes a plurality of core networks for communicating with the access network device. The access network device may be an evolutional node B (referred to as eNB or e-NodeB for short), a macro base station, a micro base station (also referred to as "small base station"), a pico base station, an access point (AP), a transmission point (TP) or a new generation Node B (gNodeB) in LTE system, NR system, authorized auxiliary access long-term evolution (LAA-LTE) system, or the like.

It should be understood that, in some embodiments of this application, a device having a communication function in the network/system may be referred to as a communication device. Taking the communication system shown in FIG. 2 as an example, the communication device may include a network device and a terminal device with the communication function, and the network device and the terminal device may be specific devices described in some embodiments of this disclosure, which will not be repeated here. The device may further include other devices in the communication system, for example, other network entities such as a network controller and a mobility management entity, which are not limited in embodiments of this application.

Since the aggregation processing approach has high requirements for product implementation, it may be necessary to design a reasonable aggregation level and UE capability requirement. On the one hand, the UE capability can support the aggregation processing approach as much as possible at a certain aggregation level, while the measurement accuracy is improved and the measurement delay is reduced. On the other hand, the mismatch between the UE capability and the aggregation level, which may make requirements for UE capability too high to be commercialized, is avoided. The specific solution of the aggregation level and UE capability is given in this application, and the corresponding measurement requirements of UE in different scenarios are given therein.

The technical solution of this disclosure will be further described below by way of examples. As shown in FIG. 3, it is a schematic diagram of a positioning measurement method according to some embodiments of this application, which may include following content.

In 301, a network device sends a configured UE capability to a terminal device, where the UE capability is used by the terminal device to determine measurement delay requirement of multiple PRSs, and the measurement delay requirement is used for the terminal device to perform positioning measurement.

Optionally, the terminal device receives the UE capability configured by the network device.

Optionally, the UE capability may include but is not limited to the following information:
at least one of a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

### (1) The maximum number of PRSs supported by the terminal device for simultaneous measurement

Exemplarily, the UE capability may include the maximum number of PRSs that are supported for simultaneous measurement, for example, 8. In some embodiments, "simultaneous" may refer to within a time slot (or referred to as slot), or within a UE processing capability cycle.

### (2) The maximum PRS bandwidth supported by the terminal device for simultaneous measurement

Exemplarily, the UE capability may include the maximum PRS bandwidth that are supported for simultaneous measurement (e.g., a bandwidth of 96 RB), or the maximum PRS resource (max_prs_resourse, e.g., resource of 192 MHz).

### (3) The maximum receive timing difference supported by the terminal device

The UE capability may also include whether the number of several PRS layers for PRS aggregation meets the requirement of simultaneous receiving time difference.

The UE shall be capable of handling at least a relative receive timing difference between slot timing of different carriers to be aggregated at the UE receiver. The corresponding translation is: "the UE shall be capable of handling at least a relative receive timing difference between slot timing of different carriers to be aggregated at the UE receiver."

In other words, MRTD is related to the band or FR (frequency range) where the PRS frequency layer is located. For example, following the MRTD requirement of CA, FR1 intra-band MRTD=3us, FR2 intra-band MRTD=0.26us, FR1 inter-band MRTD=33us, FR2 inter-band MRTD=8us, FR1-FR2 inter-band MRTD=25us. As another example, each value of MRTD requirement, which is specifically defined for PRS aggregation, is smaller than the above-mentioned values.

### (4) The processing capability supported by the terminal device

UE capability is related to UE processing capability. According to a definition of the existing UE processing capabilities, "combination per band: {N, T}" represents that PRS of N (time length) can be processed within T (time length). N determines the length of the PRS bundling that can be processed in one processing cycle, and T determines the delay of one measurement on the PRS bundling. For example, UE processing capability is 40ms, 80ms, 160ms, or the like.

Optionally, the UE capability may be a capability of supporting aggregation of the multiple PRSs. In other words, the network device may define the UE capability as the capability to support simultaneous processing of multiple PRS frequency layers (for scenarios of coherent and concurrent processing of multiple PFLs from the same TRP). Accordingly, it may be understood that the UE capability is the capability of explicitly supporting or not supporting PRS aggregation. For example, it may be indicated by 1 bit RRC signaling.

Optionally, the multiple PRSs are PRSs of the same TRP, or the multiple PRSs are PRSs of different TRPs and QCLs of the different PRSs are the same. It may be understood that whether the multiple PRSs are PRSs of the same TRP may be indicated, for example, by 1 bit RRC signaling.

In 302, the terminal device determines the measurement delay requirement of the multiple aggregated PRSs according to the configured UE capability.

It may be understood that, if multiple PRSs are aggregated in the same PRS layer, then the measurement delay requirements are the same; and if multiple PRSs are aggregated in different PRS layers, then the measurement delay requirements are different.

Optionally, the method may further include: receiving, by the terminal device, configuration information sent by the network device; and determining, by the terminal device, aggregation level information according to the configuration information. Exemplarily, UE receives the configuration information of multiple PRSs and PRS bundling sent by the network device, and obtains the aggregation level information.

It should be noted that when the network device defines the aggregation level (or aggregation type), it is assumed that those common PRS resource configurations are the same (e.g., SCS, CP, starting PRB, Comb size, PRS periodicity are the same).

Optionally, when referring to that the terminal device determines different measurement delay requirements depending on PRSs according to the configured UE capability, it may include: the terminal device determines the different measurement delay requirements depending on PRSs according to the configured aggregation level information and UE capability.
(1) The configuration information may include:
   the multiple PRSs belong to PRS resources under different PRS resource sets of a same PRS layer; or,
   the multiple PRSs belong to different PRS resources under a same PRS resource set of a same PRS layer; or,
   the multiple PRSs belong to PRS resources of different PRS layers.

The multiple PRSs satisfy a preset condition, and the preset condition includes at least one of the following:
the maximum number of aggregation layers, the maximum aggregation bandwidth, the same period, the same time domain configuration, the same SCS, the same CP, the same comb-size, the same number of PRS layers, the same carrier component (CC) timing, and the same QCL configuration of PRS.

It should be noted that the periods corresponding to different PRS resource sets are different, and the periods corresponding to the same PRS resource set are the same.

It may be understood that the above-mentioned multiple PRSs belong to PRS resources under different PRS resource sets of the same PRS layer, or, belong to different PRS resources under the same PRS resource set of the same PRS layer, or belong to PRS resources of different PRS layers. Limitation of the maximum number of PRS aggregation layers is met, for example, max=8. Limitation of the maximum aggregation bandwidth is met, for example, max=80MHz or 192 PRS resources. Periods of different PRSs (configured in the set) are the same. The time domain configurations are the same (while the frequency domain configurations may be different), the SCSs & CPs are the same, the Comb-sizes are the same, the numbers of PRS layers/CC timings are the same (the "same" here may also be understood as very close). The expected RSTD (receive signal time difference) meets the requirement of being less than or equal to the MRTD. The QCL relationship configurations of multiple PRSs are the same.

Optionally, all PRS resources participating in the aggregation are configured with the same DL-PRS-QCL-Info, as follows:
A certain PRS QCL is associated to a PRS or SSB in a serving cell or a non-serving cell. Alternatively, QCL-TypeC is associated to an SSB in a serving cell or a non-serving cell.
The QCL type is used to support FR2.
QCL-TypeC is used to assist in estimating the timing of the PRS.

The corresponding English translation is as follows:
"QCL-TypeD to a PRS/SSB in serving cell or non-serving cell. QCL-TypeC to a SSB in serving cell or non-serving cell.
QCL-TypeDis is used for supporting FR2.
QCL-TypeC is used for assisting estimating the timing of PRS."

### (2) Aggregation level information

Optionally, the aggregation level information may be used for explicitly configuring the aggregation level to the UE. Exemplarily, it may be indicated by a bit map, where x bits indicate the number of PRS layers (layer), and y bits indicate the bandwidth. Optionally, typical values of the number of layers and the bandwidth may constitute arithmetic progressions, respectively. Alternatively, sorting numbers such as level 1, 2, 3 are respectively mapped to combinations of configuration parameters.

Optionally, the aggregation level in the aggregation level information may be implicitly obtained by the UE according to the configuration parameter (or combination).
1) Optionally, the aggregation level information satisfies the limitation of the maximum number of PRS layers and/or the maximum aggregation bandwidth supported by the terminal device for aggregation. It may be understood that for the aggregation level information, the level division may be determined according to the maximum number of PRS layers (max_PFLs) and/or the maximum aggregation bandwidth (max_prs_resourse) that are supported for aggregation.

Optionally, the maximum number of PRS layers is less than or equal to the maximum number of PRSs supported by the terminal device for simultaneous measurement, and the maximum aggregation bandwidth is less than or equal to the maximum PRS bandwidth supported by the terminal device for simultaneous measurement.

2) Optionally, the aggregation level information satisfies the limitation of the period of PRS or PRS set supported by the terminal device for aggregation.

Optionally, the period of PRS or the PRS set is less than or equal to the time length corresponding to the processing capability supported by the terminal device.

It may be understood that the aggregation level information may also satisfy the limitation of parameters common to the frequency layer or set. Taking SCS for example, different SCSs correspond to a level. Taking PRS periodicity for example, different periodicities correspond to a level.

3) Optionally, the aggregation level information satisfies the limitation of the time offset supported by the terminal device for aggregation.

Optionally, the time offsets, the numbers of symbols or the QCL configurations are the same.

It may be understood that the aggregation level information may also satisfy the limitation of the time offset. Exemplarily, in the PRS configuration parameters, it is unique to each PRS resource. The parameters configured in each level apply to all aggregated PRSs. For example, the offsets, or the numbers of symbols, or the QCL configurations are the same for all aggregated PRS resources:
DL-PRS-SequenceId;
DL-PRS-ReOffset;
DL-PRS-ResourceSlotOffset;
DL-PRS-ResourceSymbolOffset;
DL-PRS-NumSymbols: classified according to the number of PRS symbols;
DL-PRS-QCL-Info: different levels such as Type C or D.

In Example 1, indication of the aggregation level includes at least the following 1 bit.

1bit: whether it is in strict time domain alignment.

For example, the strictest alignment means that each PRS (layer or set) has the same period and offset, and the same PRS resource length (DL-PRS-NumSymbols).

In other cases, non-strict alignment means that at least the PRS (layer or set) period is the same, while the PRS resource lengths (DL-PRS-NumSymbols) or offsets (e.g., DL-PRS-ResourceSlotOffset or DL-PRS-ResourceSymbolOffset) are different.

In case of the strictest alignment, the measurement requirement is relatively simple, and the measurement time may be determined only by comparing the UE processing capability and the period.

In case of non-strict alignment, it is more complicated. The measurement requirement may be processed according to respective PRS layers, or only the aligned part (having same length and offset) of the PRS resources in the PRS bundling is processed.

In Example 2, indication of the aggregation level includes at least the following 1 bit.

1bit: whether is it satisfied that the aggregation bandwidth (at least not exceeding max_prs_resourse) is still included in the UE-activated BWP.

There is a high probability that the aggregation bandwidth of multiple PRS layers will exceed the bandwidth range of BWP.

Regardless of within BWP or outside BWP, all positioning measurements are performed within the gap, thereby avoiding the switching of gap configurations caused by switching of BWPs and PRS bundling.

Alternatively, the positional relationship between the aggregation bandwidth and the activated BWP is determined to decide whether a gap is required for the measurement of PRS bundling. Gap is required when there is no complete inclusion or there is partially overlapping. In principle, all PRS layers or resources in the PRS bundling are to be measured according to the same gap configuration. Otherwise, no gap is required when the PRS bundling and the activated BWP do not overlap at all.

### (3) Relationship between UE capability and aggregation level information

1) Optionally, the maximum number of PRSs supported by the terminal device for simultaneous measurement is determined according to the number of layers in the aggregation level information.

Optionally, the number of PRSs supported by the UE capability for simultaneous measurement is related to the "layer number (PFL number)" in the PRS aggregation level information.

Exemplarily, if the UE supports PRS aggregation, it has the capability of measuring multiple PRSs simultaneously (e.g., M=3 layers). The measurement time is further scaled according to the aggregation level (mainly depends on the number of layers N). For example, when the aggregation level is not higher than the threshold (N is less than or equal to M), the measurement delay is 1/N (the time length) without aggregation. For example, when the aggregation level is higher than the threshold (N is greater than M), the measurement delay is N/M (the time length) without aggregation, and the scaler of the measurement delay is N/M.

2) Optionally, the maximum PRS bandwidth supported for simultaneous measurement is determined according to the aggregation bandwidth in the aggregation level information.

It may be understood that the maximum PRS bandwidth supported by the UE capability for simultaneous measurement is related to the "aggregation bandwidth" in the PRS aggregation level information.

Exemplarily, if 1 MO is configured with 1 PRS layer to support at most x PRS resources (corresponding to Y RBs), the UE bandwidth processing capability (BWthreshold) determines whether the current aggregation can be measured once. If the bandwidth threshold supported by the UE capability is exceeded, it may be treated as N PRSs before aggregation, that is, faster measurement is not supported after aggregation.

3) Optionally, the supported maximum receive timing difference is determined according to the expected time difference in the aggregation level information.

It may be understood that the maximum receive timing difference supported by the UE capability is related to the expected time difference (expectedRSTD) in the PRS aggregation level information.

Exemplarily, if the expectedRSTD between any two PRS layers is less than the maximum receive timing difference requirement supported by the UE capability, for example, the measurement delay requirement for simultaneous PRS measurements on multiple PFLs in this clause apply only if the timing difference among the first symbol of slot carrying PRS resource for all PFLs is received within the MRTD for intra-band or inter-band CA as defined. The corresponding translation is: "the measurement delay requirement for simultaneous PRS measurements on multiple PFLs in this clause apply only if the timing difference among the first symbol of slot carrying PRS resource for all PFLs is received within the MRTD for intra-band or inter-band CA as defined."

If the expectedRSTD between any two PRS layers exceeds the maximum receive timing difference requirement, the UE considers that the requirement of PRS bundling does not need to be met, and still performs measurement according to per PRS layer as previously followed.

4) Optionally, the supported processing capability is determined according to the period of PRS in the aggregation level information.

It may be understood that the processing capability supported by the UE capability is related to the period of PRS in the PRS aggregation level information (the PRS time domain length or symbol on each PRS layer or each PRS set may be different).

For example, if the UE processing capability is less than the equivalent period of PRS aggregation (if multiple PRSs completely overlap in the time domain, the maximum value among the periods of the multiple PRSs is taken; if they partially overlap or do not overlap in the time domain, and the length between the beginning and end of the periods of multiple PRSs should not exceed the length of PRS, N, that can be processed by the UE processing capability, then N or the length between the beginning and end of the periods of multiple PRSs is taken), the requirement of PRS aggregation measurement cannot be satisfied.

For example, if the UE processing capability (depending on N, N<T) is greater than the PRS period of the PRS aggregation, the requirement of the PRS aggregation measurement can be satisfied. For the UE, if other non-aggregated PRSs are also being measured at the same time, and the UE processing capability can no longer satisfy more PRSs than the aggregated PRSs, the aggregated PRSs may be processed first, and the measurement time may be shortened accordingly. The measurement time of the non-aggregated PRSs is scaled accordingly.

For example, if the PRS aggregation period is 80ms, the UE processing capability is {100ms, 120ms}, and there is a non-aggregated PRS period of 40ms, the former one is processed preferentially in each UE processing.

If the PRS aggregation period is 80ms, the UE processing capability is {100ms, 120ms}, and there is a non-aggregated PRS period of 20ms, both of them can be processed at the same time in each UE processing.

In 303, the terminal device performs positioning measurement according to the different measurement delay requirements.

Optionally, the method may further include: determining, by the terminal device, measurement gap information according to the aggregation level information.

When referring to that the terminal device performs the positioning measurement according to the different measurement delay requirements, it may include that the terminal device performs the positioning measurement according to the different measurement delay requirements and the measurement gap information.

Optionally, the aggregation level at least includes whether is it satisfied that the aggregation bandwidth (at least not exceeding max_prs_resourse) is still included in the UE-activated BWP, that is, the indication information of whether gap measurement is required.

Optionally, the UE may determine whether the gap is required according to the aggregation level.

For example, for long-periodicity PRS bunding (e.g., 1600ms), no gap is required. For example, if the aggregation bandwidth level is high or exceeds a certain threshold (e.g., 40Mhz, or 192 resources, or 192 RBs), the measurement may need to be performed within the gap.

In some embodiments of this application, the terminal device determines, according to the configured UE capability, different measurement delay requirements depending on multiple PRSs; and performs positioning measurement according to the different measurement delay requirements. Accordingly, the efficiency of processing PRS simultaneously can be improved, the measurement time delay can be shortened, and the measurement accuracy can be improved at the same time.

Aggregation of NR positioning frequency layers for improving positioning accuracy were investigated. Evaluation results show that aggregation of NR positioning frequency layers improves positioning accuracy under certain scenarios, configurations, and assumptions on modelled impairments as outlined in Section 8.4. Simultaneous transmission is performed by the gNB and aggregated reception is performed by the UE on intra-band one or more contiguous carriers in one or more contiguous PFLs (Downlink). Simultaneous transmission by the UE and aggregated reception by the gNB of the SRS are used for positioning in multiple contiguous intra-band carriers(Uplink).

"Aggregation of NR positioning frequency layers for improving positioning accuracy were investigated. Evaluation results show that aggregation of NR positioning frequency layers improves positioning accuracy under certain scenarios, configurations, and assumptions on modelled impairments as outlined in Section 8.4.

Simultaneous transmission by the gNB and aggregated reception by the UE of intra-band one or more contiguous carriers in one or more contiguous PFLs(Downlink).

Simultaneous transmission by the UE and aggregated reception by the gNB of the SRS for positioning in multiple contiguous intra-band carriers(Uplink)."

As shown in FIG. 4, it is a schematic diagram of a terminal device according to some embodiments of this application, which may include following content.

The processing module 401 is configured to determine measurement delay requirement of multiple aggregated PRSs according to a configured UE capability; and perform positioning measurement according to the measurement delay requirement.

Optionally, the UE capability includes at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

Optionally, the UE capability is the capability of supporting aggregation of multiple PRSs.

Optionally, the multiple PRSs are PRSs of the same TRP, or the multiple PRSs are PRSs of different TRPs and QCLs of the different PRSs are the same.

Optionally, the terminal device further includes:
a transceiving module 402, configured to receive the UE capability configured by the network device.

Optionally, the processing module 401 is specifically configured to determine the measurement delay requirement of multiple aggregated PRSs according to configured aggregation level information and the UE capability.

Optionally, the aggregation level information satisfies a limitation of a maximum number of PRS layers and/or a maximum aggregation bandwidth supported by the terminal device for aggregation.

Optionally, maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

Optionally, the aggregation level information satisfies a limitation of a PRS period for the terminal device to support aggregation.

Optionally, the PRS period is less than or equal to a time length corresponding to a processing capability supported by the terminal device.

Optionally, the aggregation level information satisfies a limitation of a time offset for the terminal device to support aggregation.

Optionally, the time offsets, the numbers of symbols or the QCL configurations are the same.

Optionally, a maximum number of PRSs supported by the terminal device for simultaneous measurement is determined according to a number of layers in the aggregation level information.

Optionally, a maximum PRS bandwidth supported for simultaneous measurement is determined according to an aggregation bandwidth in the aggregation level information.

Optionally, a maximum receive timing difference supported is determined according to an expected time difference in the aggregation level information.

Optionally, the supported processing capability is determined according to a PRS period in the aggregation level information.

Optionally, the terminal device further includes:
a transceiving module 402, configured to receive configuration information sent by a network device.

The processing module 401 is further configured to determine the aggregation level information according to the configuration information.

Optionally, the processing module 401 is further configured to determine measurement gap information according to the aggregation level information.

The processing module 401 is specifically configured to perform, by the terminal device, the positioning measurement according to the measurement delay requirement and the measurement gap information.

Optionally, the configuration information includes:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

Optionally, the configuration information includes:
the multiple PRSs satisfy a preset condition, and the preset condition includes at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

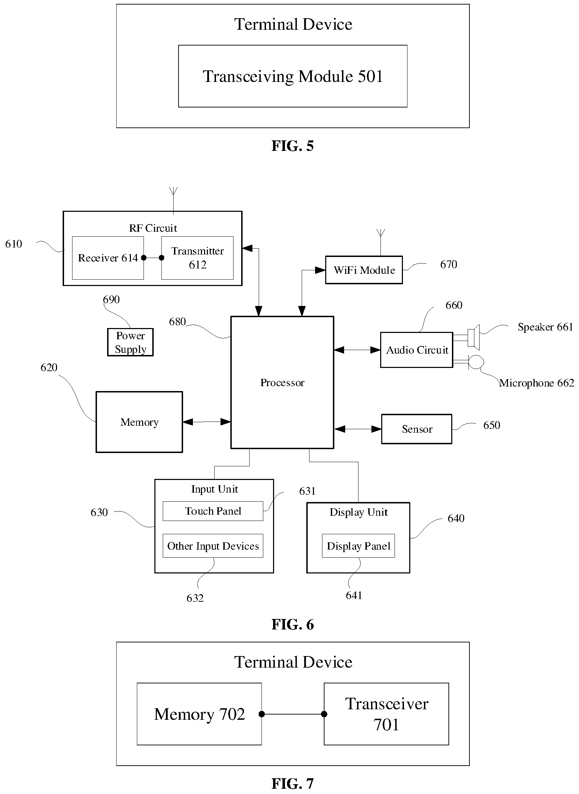

As shown in FIG. 5, it is a schematic diagram of a network device according to some embodiments of this application, which may include following content.

A transceiving module 501 is configured to send a configured UE capability to a terminal device, wherein the UE capability is used by the terminal device to determine measurement delay requirement of multiple aggregated PRSs, and the measurement delay requirement is used for the terminal device to perform positioning measurement.

Optionally, the UE capability includes at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

Optionally, the UE capability is the capability of supporting aggregation of multiple PRSs.

Optionally, the multiple PRSs are PRSs of the same TRP, or the multiple PRSs are PRSs of different TRPs and QCLs of the different PRSs are the same.

Optionally, the transceiving module 501 is further configured to send configured aggregation level information to the terminal device, wherein the aggregation level information and the UE capability are used for determining the measurement delay requirement of multiple aggregated PRSs.

Optionally, the aggregation level information satisfies a limitation of a maximum number of PRS layers and/or a maximum aggregation bandwidth supported by the terminal device for aggregation.

Optionally, the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

Optionally, the aggregation level information satisfies a limitation of a PRS period for the terminal device to support aggregation.

Optionally, the PRS period is less than or equal to a time length corresponding to a processing capability supported by the terminal device.

Optionally, the aggregation level information satisfies a limitation of a time offset for the terminal device to support aggregation.

Optionally, the time offsets, the numbers of symbols or the QCL configurations are the same.

Optionally, a maximum number of PRSs supported by the terminal device for simultaneous measurement is determined according to a number of layers in the aggregation level information.

Optionally, a maximum PRS bandwidth supported for simultaneous measurement is determined according to an aggregation bandwidth in the aggregation level information.

Optionally, a maximum receive timing difference supported is determined according to an expected time difference in the aggregation level information.

Optionally, the processing capability supported is determined according to a PRS period in the aggregation level information.

Optionally, the transceiving module 501 is further configured to send configuration information to the terminal device, wherein the configuration information is used for determining the aggregation level information.

Optionally, the configuration information includes:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

Optionally, the configuration information includes:
the multiple PRSs satisfy a preset condition, and the preset condition includes at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

Corresponding to the method applied to the terminal device as described above in at least one embodiments, embodiments of this application further provide one or more terminal devices. The terminal device in some embodiments of this application may implement any one of the foregoing methods. As shown in FIG. 6, it is a schematic diagram of a terminal device according to some other embodiments of this application. The terminal device is described by taking a mobile phone as an example, and may include a radio frequency (RF) circuit 610, a memory 620, an input unit 630, a display unit 640, a sensor 650, an audio circuit 660, a wireless fidelity (WiFi) module 670, a processor 680, a power supply 690 and the like. The radio frequency circuit 610 includes a receiver 614 and a transmitter 612. Those skilled in the art can understand that the structure of the mobile phone shown in FIG. 6 does not constitute a limitation on the mobile phone, and may include more or less components than those as shown, or combine some other components, or include different component arrangement.

In the following, various components of the mobile phone will be described in detail with reference to FIG. 6.

The RF circuit 610 may be used for receiving and sending messages, or receiving and sending signals during a call. In particular, after receiving the downlink information of the base station, it is processed by the processor 680. In addition, the relevant uplink data is sent to the base station. Generally, the RF circuit 610 includes but is not limited to an antenna, at least one amplifier, a transceiver, a coupler, a low noise amplifier (LNA), a duplexer, and the like. In addition, the RF circuit 610 may also communicate with the network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 620 is configured to store software programs and modules, and the processor 680 is configured to execute various function applications and data processing of the mobile phone by running the software programs and the modules stored in the memory 620. The memory 620 mainly includes a program storage area and a data storage area. The program storage area may store an operating system, application programs required for at least one function (e.g., the sound playback function, the image playback function) and so on. The data storage area may store data (e.g., audio data, contact list) created according to use of the mobile phone, and so on. In addition, the memory 620 may include a high-speed RAM, and may further include a non-volatile memory such as at least one disk storage device, a flash device, or other non-volatile solid storage devices.

The input unit 630 may be configured to receive input digital or character information and generate key signal input associated with user setting and function control of the mobile phone. Specifically, the input unit 630 may include a touch panel 631 and other input devices 632 . The touch panel 631, also referred to as a touch screen, can collect the user's touch operations on or near it (e.g., through the user's finger, stylus, or any suitable object or attachment on or near the touch panel 631), and drive the corresponding connection device according to the preset program. Optionally, the touch panel 631 may include two parts, a touch detection device and a touch controller. In some embodiments, the touch detection device detects the user's touch orientation, detects the signal brought by the touch operation, and transmits the signal to the touch controller. The touch controller receives the touch information from the touch detection device, converts it into contact coordinates, then sends it to the processor 680, and receives the commands sent by the processor 680 for execution. In addition, the touch panel 631 may be realized by various types of resistive, capacitive, infrared, and surface acoustic waves. In addition to the touch panel 631, the input unit 630 may also include other input devices 632. Specifically, other input devices 632 may include, but are not limited to, one or more of physical keyboards, function keys (e.g., volume control keys, switch keys, etc.), trackballs, mice, joysticks, and the like.

The display unit 640 may be configured to display information input by the user or information provided to the user as well as various menus of the mobile phone. The display unit 640 may include a display panel 641. Optionally, the display panel 641 may be configured in the form of a liquid crystal display (LCD), an organic light-emitting diode (OLED), or the like. Further, the touch panel 631 may cover the display panel 641, and when the touch panel 631 detects a touch operation on or near it, it transmits it to the processor 680 to determine the type of the touch event, and then the processor 680 determines the type of the touch event. Subsequently, the processor 680 provides corresponding visual output on display panel 641 according to the type of the touch event. Although in FIG. 6, the touch panel 631 and the display panel 641 are used as two independent components to realize the input and output functions of the mobile phone, in some embodiments, the touch panel 631 and the display panel 641 may be integrated to realize the input and output functions of the mobile phone.

The mobile phone may also include at least one sensor 650, such as a light sensor, a motion sensor, and other sensors. Specifically, the light sensor may include an ambient light sensor and a proximity sensor, among which the ambient light sensor may adjust the backlight brightness of the mobile phone and in turn adjust the brightness of the display screen 641 according to ambient lights, and the proximity sensor may turn off the display screen 641 and/or backlight when the mobile phone reaches nearby the ear. As a kind of motion sensor, the accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related applications (e.g., vertical and horizontal screen switch, related games, magnetometer attitude calibration), or the accelerometer sensor can be used for vibration-recognition related functions (e.g., a pedometer, percussion) and so on. The mobile phone can also be equipped with a gyroscope, a barometer, a hygrometer, a thermometer, and infrared sensor and other sensors, and it will not be repeated herein.

The audio circuit 660, the speaker 661, the microphone 662 may provide an audio interface between the user and the mobile phone. The audio circuit 660 may convert the received audio data into electrical signals and transfer the electrical signals to the speaker 661; thereafter the speaker 661 converts the electrical signals into sound signals to output. On the other hand, the microphone 662 converts the received sound signals into electrical signals, which will be received and converted into audio data by the audio circuit 660 to output. The audio data is then processed and transmitted by the processor 680 via the RF circuit 610 to another mobile phone for example, or, the audio data is output to the memory 620 for further processing.

Wi-Fi belongs to a short-range wireless transmission technology. With aid of the Wi-Fi module 670, the mobile phone may assist the user in E-mail receiving and sending, webpage browsing, access to streaming media and the like. Wi-Fi provides users with wireless broadband Internet access. Although the Wi-Fi module 670 is illustrated in FIG. 6, the Wi-Fi module 670 is not essential to the mobile phone and can be omitted according to actual needs without departing from the essential nature of the disclosure.

The processor 680 is the control center of the mobile phone and is configured to connect various parts of the whole mobile phone through various interfaces and lines, run or execute software programs and/or modules stored in the memory 620, and invoke data stored in the memory 620 to perform various functions of the mobile phone and process data, thereby monitoring the mobile phone as a whole. Optionally, the processor 680 may include one or more processing units. For example, the processor 680 may integrate an application processor and a modem processor, where the application processor is configured to handle the operating system, the user interface, the application, and so on, and the modem processor is mainly configured to process wireless communication. It will be understood that the above-mentioned modem processor may not be integrated into the processor 680.

The mobile phone also includes a power supply 690 (e.g., a battery) that supplies power to various components. For instance, the power supply 690 may be logically connected to the processor 680 via a power management system to enable management of charging, discharging, and power consumption through the power management system. Although not shown, the mobile phone may also include a camera, a Bluetooth module, and the like, which will not be repeated here.

In some embodiments of this disclosure, the processor 680 is configured to determine measurement delay requirement of multiple aggregated PRSs according to a configured UE capability; and perform positioning measurement according to the measurement delay requirement.

Optionally, the UE capability includes at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

Optionally, the UE capability is the capability of supporting aggregation of multiple PRSs.

Optionally, the multiple PRSs are PRSs of the same TRP, or the multiple PRSs are PRSs of different TRPs and QCLs of the different PRSs are the same.

Optionally, the RF circuit 610 is configured to receive the UE capability configured by the network device.

Optionally, the processor 680 is specifically configured to determine the measurement delay requirement of multiple aggregated PRSs according to configured aggregation level information and the UE capability.

Optionally, the aggregation level information satisfies a limitation of a maximum number of PRS layers and/or a maximum aggregation bandwidth supported by the terminal device for aggregation.

Optionally, the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

Optionally, the aggregation level information satisfies a limitation of a PRS period for the terminal device to support aggregation.

Optionally, the PRS period is less than or equal to a time length corresponding to a processing capability supported by the terminal device.

Optionally, the aggregation level information satisfies a limitation of a time offset for the terminal device to support aggregation.

Optionally, the time offsets, the numbers of symbols or the QCL configurations are the same.

Optionally, a maximum number of PRSs supported by the terminal device for simultaneous measurement is determined according to a number of layers in the aggregation level information.

Optionally, a maximum PRS bandwidth supported for simultaneous measurement is determined according to an aggregation bandwidth in the aggregation level information.

Optionally, a maximum receive timing difference supported is determined according to an expected time difference in the aggregation level information.

Optionally, the processing capability supported is determined according to a PRS period in the aggregation level information.

Optionally, the RF circuit 610 is configured to receive configuration information sent by the network device.

The processor 680 is further configured to determine the aggregation level information according to the configuration information.

Optionally, the processor 680 is further configured to determine measurement gap information according to the aggregation level information.

The processor 680 is specifically configured for the terminal device to perform positioning measurement according to the measurement delay requirement and the measurement gap information.

Optionally, the configuration information includes:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

Optionally, the configuration information includes:
the multiple PRSs satisfy a preset condition, and the preset condition includes at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

As shown in FIG. 7, it is a schematic diagram of a network device according to some other embodiments of this application, which may include following content.

A memory 702 is configured to store executable program codes, and the memory 702 is coupled to the transceiver 701.

A transceiver 701 is configured to send a configured UE capability to a terminal device, wherein the UE capability is used by the terminal device to determine measurement delay requirement of multiple aggregated PRSs, and the measurement delay requirement is used for the terminal device to perform positioning measurement.

Optionally, the UE capability include at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

Optionally, the UE capability is the capability of supporting aggregation of multiple PRSs.

Optionally, the multiple PRSs are PRSs of the same TRP, or the multiple PRSs are PRSs of different TRPs and QCLs of the different PRSs are the same.

Optionally, the transceiver 701 is further configured to send configured aggregation level information to the terminal device, wherein the aggregation level information and the UE capability are used for determining the measurement delay requirement of multiple aggregated PRSs.

Optionally, the aggregation level information satisfies a limitation of a maximum number of PRS layers and/or a maximum aggregation bandwidth supported by the terminal device for aggregation.

Optionally, the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

Optionally, the aggregation level information satisfies a limitation of a PRS period for the terminal device to support aggregation.

Optionally, the PRS period is less than or equal to a time length corresponding to a processing capability supported by the terminal device.

Optionally, the aggregation level information satisfies a limitation of a time offset for the terminal device to support aggregation.

Optionally, the time offsets, the numbers of symbols or the QCL configurations are the same.

Optionally, a maximum number of PRSs supported by the terminal device for simultaneous measurement is determined according to a number of layers in the aggregation level information.

Optionally, a maximum PRS bandwidth supported for simultaneous measurement is determined according to an aggregation bandwidth in the aggregation level information.

Optionally, a maximum receive timing difference supported is determined according to an expected time difference in the aggregation level information.

Optionally, the processing capability supported is determined according to a PRS period in the aggregation level information.

Optionally, the transceiver 701 is further configured to send configuration information to the terminal device, where the configuration information is used for determining the aggregation level information.

Optionally, the configuration information includes:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

Optionally, the configuration information includes:
the multiple PRSs satisfy a preset condition, and the preset condition includes at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

The above-mentioned embodiments may be implemented in whole or in part by software, hardware, firmware or any combination thereof. When implemented in software, it may be implemented in whole or in part in the form of a computer program product. The computer program product includes one or more computer instructions. When the computer program instructions are loaded and executed on a computer, all or part of the processes or functions described in some embodiments of this disclosure are generated. The computer may be a general purpose computer, dedicated purpose computer, a computer network, or other programmable device. The computer instructions may be stored in or transmitted from one computer-readable storage medium to another computer-readable storage medium, for example, the computer instructions may be downloaded from a website site, computer, server, or data center and transmitted to another website site, computer, server, or data center by wire (e.g., coaxial cable, fiber optic, digital subscriber line (DSL)) or wireless (e.g., infrared, wireless, microwave). The computer-readable storage medium may be any available medium that can be stored by a computer, or a data storage device such as a server, data center, and the like, which includes one or more available medium integrated. The usable medium may be magnetic medium (e.g., floppy disks, hard disks, magnetic tapes), optical medium (e.g., DVD), or semiconductor medium (e.g., Solid State Disk (SSD)), and the like.

The terms "first", "second", "third", "fourth", and the like (if present) in the description and claims of this disclosure and the above-mentioned drawings are only used to distinguish similar objects and are not necessarily used to describe a specific order or sequence. It is to be understood that data so used may be interchanged under appropriate circumstances so that some embodiments described herein can be practiced in sequences other than those illustrated or described herein. Furthermore, the terms "comprising" and "having" and any variations thereof, are intended to cover non-exclusive inclusion, for example, a process, method, system, product or device comprising a series of steps or units is not necessarily limited to those expressly listed. Instead, those steps or units may include other steps or units not expressly listed or inherent to these processes, methods, products or devices.

## Claims

1. A positioning measurement method, **characterized in** comprising:
determining, by a terminal device, measurement delay requirement of multiple aggregated positioning reference signals (PRSs) according to a configured UE capability; and
performing, by the terminal device, positioning measurement according to the measurement delay requirement.

2. The method according to claim 1, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

3. The method according to claim 1 or 2, wherein the UE capability is a capability of supporting aggregation of multiple PRSs.

4. The method according to claim 3, wherein the multiple PRSs are PRSs of a same transmission/reception point (TRP); or the multiple PRSs are PRSs of different TRPs and the different PRSs correspond to a same quasi co-location (QCL).

5. The method according to any one of claims 1-4, further comprising:
receiving, by the terminal device, the UE capability configured by a network device.

6. The method according to any one of claims 1-5, wherein determining, by the terminal device, the measurement delay requirement of multiple aggregated PRSs according to the UE capability as configured comprises:
determining, by the terminal device, the measurement delay requirement of multiple aggregated PRSs according to configured aggregation level information and the UE capability.

7. The method according to claim 6, wherein the aggregation level information satisfies a limitation of a maximum number of PRS layers and/or a maximum aggregation bandwidth supported by the terminal device for aggregation.

8. The method according to claim 7, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

9. The method according to any one of claims 6-8, wherein the aggregation level information satisfies a limitation of a PRS period for the terminal device to support aggregation.

10. The method according to claim 9, wherein the PRS period is less than or equal to a time length corresponding to a processing capability supported by the terminal device.

11. The method according to any one of claims 6-10, wherein the aggregation level information satisfies a limitation of a time offset for the terminal device to support aggregation.

12. The method according to claim 11, wherein the time offset, a number of symbols or a QCL configuration is the same.

13. The method according to any one of claims 6-12, wherein a maximum number of PRSs supported by the terminal device for simultaneous measurement is determined according to a number of layers in the aggregation level information.

14. The method according to any one of claims 6-12, wherein a maximum PRS bandwidth supported for simultaneous measurement is determined according to an aggregation bandwidth in the aggregation level information.

15. The method according to any one of claims 6-12, wherein a maximum receive timing difference supported is determined according to an expected time difference in the aggregation level information.

16. The method according to any one of claims 6-12, wherein the processing capability supported is determined according to a PRS period in the aggregation level information.

17. The method according to any one of claims 6-16, further comprising:
receiving, by the terminal device, configuration information sent by a network device; and
determining, by the terminal device, the aggregation level information according to the configuration information.

18. The method according to claim 17, further comprising:
determining, by the terminal device, measurement gap information according to the aggregation level information;
wherein performing, by the terminal device, the positioning measurement according to the measurement delay requirement comprises:
performing, by the terminal device, the positioning measurement according to the measurement delay requirement and the measurement gap information.

19. The method according to claim 17 or 18, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

20. The method according to any one of claims 17-19, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

21. A positioning measurement method, **characterized in** comprising:
sending, by a network device, a configured UE capability to a terminal device, wherein the UE capability is used by the terminal device to determine measurement delay requirement of multiple aggregated positioning reference signals (PRSs), and the measurement delay requirement is used for the terminal device to perform positioning measurement.

22. The method according to claim 21, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

23. The method according to claim 21 or 22, wherein the UE capability is a capability of supporting aggregation of multiple PRSs.

24. The method according to claim 23, wherein the multiple PRSs are PRSs of a same transmission/reception point (TRP); or the multiple PRSs are PRSs of different TRPs and the different PRSs correspond to a same quasi co-location (QCL).

25. The method according to any one of claims 21-24, further comprising:
sending, by the network device, configured aggregation level information to the terminal device, wherein the aggregation level information and the UE capability are used for determining the measurement delay requirement of multiple aggregated PRSs.

26. The method according to claim 25, wherein the aggregation level information satisfies a limitation of a maximum number of PRS layers and/or a maximum aggregation bandwidth supported by the terminal device for aggregation.

27. The method according to claim 26, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

28. The method according to any one of claims 25-27, wherein the aggregation level information satisfies a limitation of a PRS period for the terminal device to support aggregation.

29. The method according to claim 28, wherein the PRS period is less than or equal to a time length corresponding to a processing capability supported by the terminal device.

30. The method according to any one of claims 25-29, wherein the aggregation level information satisfies a limitation of a time offset for the terminal device to support aggregation.

31. The method according to claim 30, wherein the time offset, a number of symbols or a QCL configuration is the same.

32. The method according to any one of claims 25-31, wherein a maximum number of PRSs supported by the terminal device for simultaneous measurement is determined according to a number of layers in the aggregation level information.

33. The method according to any one of claims 25-31, wherein a maximum PRS bandwidth supported for simultaneous measurement is determined according to an aggregation bandwidth in the aggregation level information.

34. The method according to any one of claims 25-31, wherein a maximum receive timing difference supported is determined according to an expected time difference in the aggregation level information.

35. The method according to any one of claims 25-31, wherein the processing capability supported is determined according to a PRS period in the aggregation level information.

36. The method according to any one of claims 25-35, further comprising:
sending, by the network device, configuration information to the terminal device, wherein the configuration information is used for determining the aggregation level information.

37. The method according to claim 36, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

38. The method according to claim 36 or 37, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

39. A terminal device, **characterized in** comprising:
a processing module, configured to determine measurement delay requirement of multiple aggregated positioning reference signals (PRSs) according to a configured UE capability; and perform positioning measurement according to the measurement delay requirement.

40. The terminal device according to claim 39, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

41. The terminal device according to claim 39 or 40, wherein the UE capability is a capability of supporting aggregation of multiple PRSs.

42. The terminal device according to claim 41, wherein the multiple PRSs are PRSs of a same transmission/reception point (TRP); or the multiple PRSs are PRSs of different TRPs and the different PRSs correspond to a same quasi co-location (QCL).

43. The terminal device according to any one of claims 39-42, further comprising:
a transceiving module, configured to receive the UE capability configured by a network device.

44. The terminal device according to any one of claims 39-43, wherein
the processing module is specifically configured to determine the measurement delay requirement of multiple aggregated PRSs according to configured aggregation level information and the UE capability.

45. The terminal device according to claim 44, wherein the aggregation level information satisfies a limitation of a maximum number of PRS layers and/or a maximum aggregation bandwidth supported by the terminal device for aggregation.

46. The terminal device according to claim 45, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

47. The terminal device according to any one of claims 44-46, wherein the aggregation level information satisfies a limitation of a PRS period for the terminal device to support aggregation.

48. The terminal device according to claim 47, wherein the PRS period is less than or equal to a time length corresponding to a processing capability supported by the terminal device.

49. The terminal device according to any one of claims 44-48, wherein the aggregation level information satisfies a limitation of a time offset for the terminal device to support aggregation.

50. The terminal device according to claim 49, wherein the time offset, a number of symbols or a QCL configuration is the same.

51. The terminal device according to any one of claims 44-50, wherein a maximum number of PRSs supported by the terminal device for simultaneous measurement is determined according to a number of layers in the aggregation level information.

52. The terminal device according to any one of claims 44-50, wherein a maximum PRS bandwidth supported for simultaneous measurement is determined according to an aggregation bandwidth in the aggregation level information.

53. The terminal device according to any one of claims 44-50, wherein a maximum receive timing difference supported is determined according to an expected time difference in the aggregation level information.

54. The terminal device according to any one of claims 44-50, wherein the processing capability supported is determined according to a PRS period in the aggregation level information.

55. The terminal device according to any one of claims 44-54, further comprising:
a transceiving module, configured to receive configuration information sent by a network device; and
the processing module is further configured to determine the aggregation level information according to the configuration information.

56. The terminal device according to claim 55, wherein
the processing module is further configured to determine measurement gap information according to the aggregation level information;
and the processing module is specifically configured to perform, by the terminal device, the positioning measurement according to the measurement delay requirement and the measurement gap information.

57. The terminal device according to claim 55 or 56, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

58. The terminal device according to any one of claims 45-57, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

59. A network device, **characterized in** comprising:
a transceiving module, configured to send a configured UE capability to a terminal device, wherein the UE capability is used by the terminal device to determine measurement delay requirement of multiple aggregated positioning reference signals (PRSs), and the measurement delay requirement is used for the terminal device to perform positioning measurement.

60. The network device according to claim 59, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

61. The network device according to claim 59 or 60, wherein the UE capability is a capability of supporting aggregation of multiple PRSs.

62. The network device according to claim 61, wherein the multiple PRSs are PRSs of a same transmission/reception point (TRP); or the multiple PRSs are PRSs of different TRPs and the different PRSs correspond to a same quasi co-location (QCL).

63. The network device according to any one of claims 59-62, further comprising:
the transceiving module further configured to send configured aggregation level information to the terminal device, wherein the aggregation level information and the UE capability are used for determining the measurement delay requirement of multiple aggregated PRSs.

64. The network device according to claim 63, wherein the aggregation level information satisfies a limitation of a maximum number of PRS layers and/or a maximum aggregation bandwidth supported by the terminal device for aggregation.

65. The network device according to claim 64, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

66. The network device according to any one of claims 63-65, wherein the aggregation level information satisfies a limitation of a PRS period for the terminal device to support aggregation.

67. The network device according to claim 66, wherein the PRS period is less than or equal to a time length corresponding to a processing capability supported by the terminal device.

68. The network device according to any one of claims 63-67, wherein the aggregation level information satisfies a limitation of a time offset for the terminal device to support aggregation.

69. The network device according to claim 68, wherein the time offset, a number of symbols or a QCL configuration is the same.

70. The network device according to any one of claims 63-69, wherein a maximum number of PRSs supported by the terminal device for simultaneous measurement is determined according to a number of layers in the aggregation level information.

71. The network device according to any one of claims 63-69, wherein a maximum PRS bandwidth supported for simultaneous measurement is determined according to an aggregation bandwidth in the aggregation level information.

72. The network device according to any one of claims 63-69, wherein a maximum receive timing difference supported is determined according to an expected time difference in the aggregation level information.

73. The network device according to any one of claims 63-69, wherein the processing capability supported is determined according to a PRS period in the aggregation level information.

74. The network device according to any one of claims 63-73, wherein
the transceiving module is further configured to send configuration information to the terminal device, wherein the configuration information is used for determining the aggregation level information.

75. The network device according to claim 74, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

76. The network device according to claim 74 or 75, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

77. A terminal device, **characterized in** comprising:
a processor, configured to determine measurement delay requirement of multiple aggregated positioning reference signals (PRSs) according to a configured UE capability; and perform positioning measurement according to the measurement delay requirement.

78. The terminal device according to claim 77, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

79. The terminal device according to claim 77 or 78, wherein the UE capability is a capability of supporting aggregation of multiple PRSs.

80. The terminal device according to claim 79, wherein the multiple PRSs are PRSs of a same transmission/reception point (TRP); or the multiple PRSs are PRSs of different TRPs and the different PRSs correspond to a same quasi co-location (QCL).

81. The terminal device according to any one of claims 77-80, further comprising:
a transceiver, configured to receive the UE capability configured by a network device.

82. The terminal device according to any one of claims 77-81, wherein
the processor is specifically configured to determine the measurement delay requirement of multiple aggregated PRSs according to configured aggregation level information and the UE capability.

83. The terminal device according to claim 82, wherein the aggregation level information satisfies a limitation of a maximum number of PRS layers and/or a maximum aggregation bandwidth supported by the terminal device for aggregation.

84. The terminal device according to claim 83, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

85. The terminal device according to any one of claims 82-84, wherein the aggregation level information satisfies a limitation of a PRS period for the terminal device to support aggregation.

86. The terminal device according to claim 85, wherein the PRS period is less than or equal to a time length corresponding to a processing capability supported by the terminal device.

87. The terminal device according to any one of claims 82-86, wherein the aggregation level information satisfies a limitation of a time offset for the terminal device to support aggregation.

88. The terminal device according to claim 87, wherein the time offset, a number of symbols or a QCL configuration is the same.

89. The terminal device according to any one of claims 82-88, wherein a maximum number of PRSs supported by the terminal device for simultaneous measurement is determined according to a number of layers in the aggregation level information.

90. The terminal device according to any one of claims 82-88, wherein a maximum PRS bandwidth supported for simultaneous measurement is determined according to an aggregation bandwidth in the aggregation level information.

91. The terminal device according to any one of claims 82-88, wherein a maximum receive timing difference supported is determined according to an expected time difference in the aggregation level information.

92. The terminal device according to any one of claims 82-88, wherein the processing capability supported is determined according to a PRS period in the aggregation level information.

93. The terminal device according to any one of claims 81-92, further comprising:
a transceiver, configured to receive configuration information sent by a network device; and
the processor is further configured to determine the aggregation level information according to the configuration information.

94. The terminal device according to claim 93, wherein
the processor is further configured to determine measurement gap information according to the aggregation level information;
and the processor is specifically configured to perform, by the terminal device, the positioning measurement according to the measurement delay requirement and the measurement gap information.

95. The terminal device according to claim 93 or 94, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

96. The terminal device according to any one of claims 93-95, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

97. A network device, **characterized in** comprising:
a transceiver, configured to send a configured UE capability to a terminal device, wherein the UE capability is used by the terminal device to determine measurement delay requirement of multiple aggregated positioning reference signals (PRSs), and the measurement delay requirement is used for the terminal device to perform positioning measurement.

98. The network device according to claim 97, wherein the UE capability comprises at least one of:
a maximum number of PRSs supported by the terminal device for simultaneous measurement, a maximum PRS bandwidth supported by the terminal device for simultaneous measurement, a maximum receive timing difference supported by the terminal device, a processing capability supported by the terminal device.

99. The network device according to claim 97 or 98, wherein the UE capability is a capability of supporting aggregation of multiple PRSs.

100. The network device according to claim 99, wherein the multiple PRSs are PRSs of a same transmission/reception point (TRP); or the multiple PRSs are PRSs of different TRPs and the different PRSs correspond to a same quasi co-location (QCL).

101. The network device according to any one of claims 97-100, wherein
the transceiver is further configured to send configured aggregation level information to the terminal device, wherein the aggregation level information and the UE capability are used for determining the measurement delay requirement of multiple aggregated PRSs.

102. The network device according to claim 101, wherein the aggregation level information satisfies a limitation of a maximum number of PRS layers and/or a maximum aggregation bandwidth supported by the terminal device for aggregation.

103. The network device according to claim 102, wherein the maximum number of PRS layers is less than or equal to a maximum number of PRSs supported by the terminal device for simultaneous measurement, and the maximum aggregation bandwidth is less than or equal to a maximum PRS bandwidth supported by the terminal device for simultaneous measurement.

104. The network device according to any one of claims 101-103, wherein the aggregation level information satisfies a limitation of a PRS period for the terminal device to support aggregation.

105. The network device according to claim 104, wherein the PRS period is less than or equal to a time length corresponding to a processing capability supported by the terminal device.

106. The network device according to any one of claims 101-105, wherein the aggregation level information satisfies a limitation of a time offset for the terminal device to support aggregation.

107. The network device according to claim 106, wherein the time offset, a number of symbols or a QCL configuration is the same.

108. The network device according to any one of claims 101-107, wherein a maximum number of PRSs supported by the terminal device for simultaneous measurement is determined according to a number of layers in the aggregation level information.

109. The network device according to any one of claims 101-107, wherein a maximum PRS bandwidth supported for simultaneous measurement is determined according to an aggregation bandwidth in the aggregation level information.

110. The network device according to any one of claims 101-107, wherein a maximum receive timing difference supported is determined according to an expected time difference in the aggregation level information.

111. The network device according to any one of claims 101-107, wherein the processing capability supported is determined according to a PRS period in the aggregation level information.

112. The network device according to any one of claims 101-111, wherein
the transceiver is further configured to send configuration information to the terminal device, wherein the configuration information is used for determining the aggregation level information.

113. The network device according to claim 112, wherein the configuration information comprises:
the multiple PRSs belong to PRS resources under different PRS resource sets of a same PRS layer; or,
the multiple PRSs belong to different PRS resources under a same PRS resource set of a same PRS layer; or,
the multiple PRSs belong to PRS resources of different PRS layers.

114. The network device according to claim 112 or 113, wherein the configuration information comprises:
the multiple PRSs satisfy a preset condition, and the preset condition comprises at least one of following:
a maximum number of aggregation layers, a maximum aggregation bandwidth, a same period, a same time domain configuration, a same subcarrier spacing (SCS), a same cyclic prefix (CP), a same comb-size, a same number of PRS layers, a same carrier component (CC) timing, and a same QCL configuration of PRS.

115. A computer-readable storage medium comprising instructions which, when running on a computer, cause the computer to implement the method according to any one of claims 1-20, or, any one of claims 21-38.
